# EUROPEAN PATENT APPLICATION

(11) **EP 4 641 674 A1**
(43) Date of publication of application: **29.10.2025**
(21) Application number: 25167855.3
(22) Date of filing: 01.04.2025
(51) Int. Cl.: H01M 4/36, H01M 4/485, H01M 4/505, H01M 4/525, H01M 4/62, H01M 10/0525, H01M 4/02

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(30) Priority: 26.04.2024 KR 20240056128
(71) Applicant: Samsung SDI Co., Ltd., Yongin-si, Gyeonggi-do 17084 (KR)
(72) Inventor: KIM, Sangmi, Yongin-si, 17084 (KR); KIM, Young-Ki, Yongin-si, 17084 (KR); CHOI, Aram, Yongin-si, 17084 (KR); DOO, Sungwook, Yongin-si, 17084 (KR); KANG, Gwiwoon, Yongin-si, 17084 (KR)
(74) Representative: Marks & Clerk LLP

(57) **Abstract**

A positive electrode active material for a rechargeable lithium battery, a positive electrode including the positive electrode active material, and a rechargeable lithium battery including the positive electrode are disclosed. The positive electrode active material includes first particles comprising a compound of Liₐ₁Feₓ₁B¹_{y1}PO_{4-b1} and having a first average particle diameter, and second particles comprising a compound of Liₐ₂Niₓ₂Co_{y2}Mn_{z2}X_{c2}O_{2-b2} and having a second average particle diameter that is greater than the first average particle diameter. The content (e.g., amount) of the first particles is greater than the content (e.g., amount) of the second particles in the positive electrode active material.

## Description

### BACKGROUND

### 1. Field

One or more embodiments of the present disclosure relate to a positive electrode active material for a rechargeable lithium battery, a positive electrode including the positive electrode active material, and a rechargeable lithium battery including the positive electrode. For example, the present disclosure relates to a positive electrode active material including an olivine-based lithium compound, a positive electrode including the olivine-based lithium compound, and a rechargeable lithium battery including the olivine-based lithium compound.

### 2. Description of the Related Art

Recently, with the rapid spread and popularization of electronic devices that use batteries, such as mobile phones, laptop computers, and/or electric vehicles, the demand for such batteries, e.g., rechargeable batteries, with relatively high energy density and high capacity is rapidly increasing. Accordingly, research and development to improve the performance of such rechargeable batteries, e.g., rechargeable lithium batteries, is being actively conducted.

A rechargeable lithium battery is a battery including a positive electrode and a negative electrode containing active materials capable of intercalation and deintercalation of lithium ions, and an electrolyte, and produces electrical energy through the oxidation and reduction reactions when lithium ions are intercalated into and deintercalated from the positive electrode and negative electrode (e.g., intercalated into the positive electrode and/or deintercalated from the negative electrode during the discharge process).

### SUMMARY

One or more aspects of embodiments of the present disclosure are directed toward a positive electrode active material having a high energy density, a high operating voltage, and a high conductivity.

One or more aspects of embodiments of the present disclosure are directed toward a rechargeable lithium battery having a high energy density, a high operating voltage, and high low-temperature properties.

Additional aspects will be set forth in part in the description which follows and, in part, will be apparent from the description, or may be learned by practice of the presented embodiments of the disclosure.

According to one or more embodiments of the disclosure, a positive electrode active material includes first particles including a compound of Chemical Formula 1 and having a first average particle diameter, and second particles including a compound of Chemical Formula 2 and having a second average particle diameter that is greater than the first average particle diameter. A content (e.g., amount) of the first particles may be greater than a content (e.g., amount) of the second particles.

**Chemical Formula 1** **Liₐ₁Feₓ₁B¹_{y1}PO_{4-b1}**

In Chemical Formula 1, 0.8≤a1≤1.2, 0.1≤x1≤1.0, 0.001≤y1≤0.05, 0≤b1≤0.05, x1 + y1 = 1, and B¹ includes (e.g., be) at least one element selected from among the group consisting of titanium (Ti), magnesium (Mg), vanadium (V), and niobium (Nb).

**Chemical Formula 2** **Liₐ₂Niₓ₂Co_{y2}Mn_{z2}X_{c2}O_{2-b2}**

In Chemical Formula 2, 0.8≤a2≤1.2, 0.8≤x2≤1.0, 0≤y2≤0.1, 0≤z2≤0.1 0≤c2≤ 0.05, 0≤b2≤0.05, x2 + y2 + z2 + c2 = 1, and X includes (e.g., be) at least one element selected from among the group consisting of aluminium (Al), titanium (Ti), magnesium (Mg), zirconium (Zr), molybdenum (Mo), and niobium (Nb).

According to one or more embodiments of the disclosure, a positive electrode for a rechargeable lithium battery includes a positive electrode current collector, and a positive electrode active material layer on the positive electrode current collector. The positive electrode active material layer includes the positive electrode active material, a conductive material, and a binder.

According to one or more embodiments of the disclosure, a rechargeable lithium battery includes the positive electrode, a negative electrode including a negative electrode current collector and a negative electrode active material layer on the negative electrode current collector, and a separator between the positive electrode and the negative electrode.

At least some of the above and other features of the invention are set out in the claims.

### BRIEF DESCRIPTION OF THE DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.
FIG. 1 illustrates a simplified conceptual diagram showing a rechargeable lithium battery according to one or more embodiments of the present disclosure.
FIGS. 2 - 5 each illustrate a simplified diagram showing a rechargeable lithium battery according to one or more embodiments of the present disclosure, where FIG. 2 illustrates a cylindrical battery, FIG. 3 illustrates a prismatic battery, and FIGS. 4 and 5 each illustrate a pouch-type or kind battery.
FIG. 6 illustrates an enlarged view showing a positive electrode active material layer of a rechargeable lithium battery according to one or more embodiments of the present disclosure.
FIG. 7A illustrates a scanning electron microscope (SEM) image showing a positive electrode active material of Example 1 of the present disclosure.
FIG. 7B illustrates a scanning electron microscope (SEM) image showing a positive electrode active material of Example 2 of the present disclosure.
FIG. 8 is a graph showing voltage-capacity properties of rechargeable lithium batteries according to one or more embodiments of the present disclosure.
FIGS. 9A and 9B are each a graph showing differential capacity of rechargeable lithium batteries according to one or more embodiments of the present disclosure.

### DETAILED DESCRIPTION

In order to sufficiently understand the configurations and aspects of the present disclosure, one or more embodiments of the disclosure will be described with reference to the accompanying drawings. It should be noted, however, that the disclosure is not limited to the following example embodiments, and may be implemented in one or more suitable forms. Rather, the example embodiments are provided only to illustrate the present disclosure and let those skilled in the art fully know the scope of the disclosure.

In the present disclosure, it will be understood that, if (e.g., when) an element is referred to as being on another element, the element may be directly on the other element or intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise specially noted in the present disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure". In addition, unless otherwise specially noted, the phrase "A or B" or "A and/or B" or "A/B" may indicate "A but not B", "B but not A", and "A and B". The terms "comprise(s)/include(s)" and/or "comprising/including" used in the present disclosure do not exclude the presence or addition of one or more other components.

As used herein, the term "combination thereof" may refer to a mixture, a stack, a composite, a copolymer, an alloy, a blend, or a reaction product of the constituents.

Unless otherwise specially defined in present disclosure, a particle diameter/size may be an average particle diameter/size. Also, a particle diameter/size refers to an average particle diameter/size (D50), which refers to the diameter/size of particles at a cumulative volume of about 50 vol% in particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D50) may be measured by a method widely suitable to those skilled in the art, for example, by a particle size analyzer, for example, HORIBA, LA-950 laser particle size analyzer, or by using a transmission electron microscope (TEM) image or a scanning electron microscope (SEM) image. In one or more embodiments, the average particle diameter/size may be measured by a measurement device using dynamic light-scattering, wherein data analysis is conducted to count the number of particles for each particle size range, and an average particle diameter/size (D50) value may then be obtained through calculation. Also, a laser scattering method may be utilized to measure the average particle diameter/size. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter/size (D50) based on about 50% of particle diameter distribution may be calculated in the measurement instrument. In the present disclosure, when particles are spherical, "diameter" indicates an average particle diameter, and when the particles are non-spherical, the "diameter" indicates a major axis length.

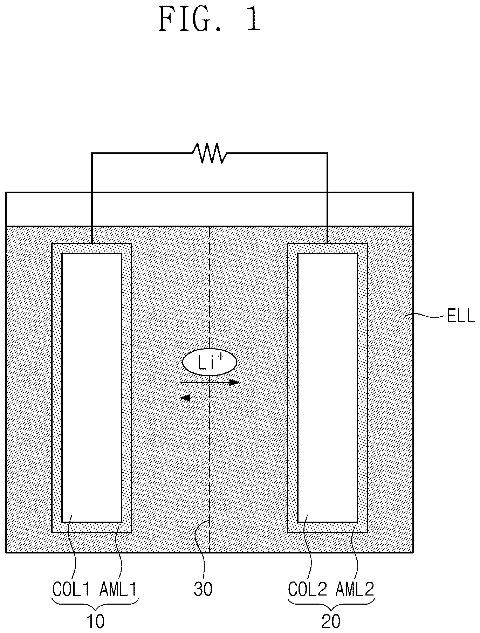

FIG. 1 illustrates a simplified conceptual diagram of a rechargeable lithium battery according to one or more embodiments of the present disclosure. Referring to FIG. 1, a rechargeable lithium battery may include a positive electrode 10, a negative electrode 20, a separator 30, and an electrolyte (e.g., an electrolyte solution) ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20 and the separator 30 may be in contact with the electrolyte solution ELL. For example, the positive electrode 10, the negative electrode 20, and the separator 30 may be immersed in (e.g., impregnated with) the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

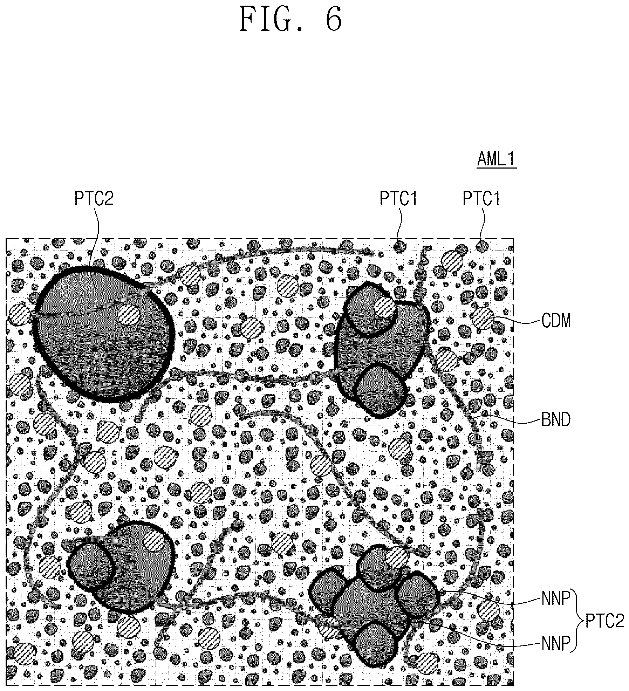

The positive electrode 10 for a rechargeable lithium battery includes a current collector COL1 and a positive electrode active material layer AML1 on the current collector COL1. The positive electrode active material layer AML1 includes a positive electrode active material (e.g., in a form of particles) and further includes a binder and a conductive material (e.g., electron conductor). Detailed description on the positive electrode active material layer AML1 according to one or more embodiments of the disclosure will be explained later with reference to FIG. 6. In one or more embodiments, aluminium (Al) may be used as the current collector COL1, but embodiments of the present disclosure are not limited thereto.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material (e.g., in a form of particles) and may further include a binder and/or a conductive material (e.g., electron conductor).

For example, in one or more embodiments, the negative electrode active material layer AML2 may include about 90 wt% to about 99 wt% of the negative electrode active material, about 0.5 wt% to about 5 wt% of the binder, and about 0 wt% to about 5 wt% of the conductive material, based on 100 wt% of a total weight of the negative electrode active material layer.

The binder may serve to attach the negative electrode active material particles well to each other and also to attach the negative electrode active material well to the current collector COL2. The binder may include a non-aqueous (e.g., water-insoluble) binder, an aqueous (water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include sodium (Na), potassium (K), or lithium (Li).

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electron conductor) may be used to impart conductivity to the electrode. Any material that does not cause chemical change and is an electron conductive material may be used in the battery. Non-limiting examples of the conductive material may include: a carbon-based material such as natural graphite, artificial graphite, carbon black, acetylene black, Ketjen black, a carbon fiber, a carbon nanofiber, and/or carbon nanotube; a metal-based material including copper, nickel, aluminium, silver, and/or the like., in a form of a metal powder or a metal fiber; a conductive polymer such as a polyphenylene derivative; and/or a (e.g., any suitable) mixture thereof.

The current collector COL2 may use a copper foil, a nickel foil, a stainless steel foil, a titanium foil, a nickel foam, a copper foam, a polymer substrate coated with a conductive metal, or a (e.g., any suitable) combination thereof.

### Negative Electrode Active Material

The negative electrode active material in the negative electrode active material layer AML2 may include a material that reversibly intercalates/deintercalates lithium ions, a lithium metal, a lithium metal alloy, a material capable of doping and de-doping lithium, or a transition metal oxide.

The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as non-shaped (e.g., irregularly shaped), sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping and de-doping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is selected from among an alkali metal, an alkaline earth metal, a Group 13 element, a Group 14 element (except for Si), a Group 15 element, a Group 16 element, a transition metal, a rare-earth element, and a (e.g., any suitable) combination thereof), and/or a (e.g., any suitable) combination thereof. The Sn-based negative electrode active material may include Sn, SnOₖ (0<k≤2) (e.g., SnO₂), a Sn-based alloy, and/or a (e.g., any suitable) combination thereof.

The silicon-carbon composite may be a composite of silicon and amorphous carbon (e.g., in a form of particles). According to one or more embodiments, the silicon-carbon composite may be in a form of silicon particles and amorphous carbon coated on the surface of each of the silicon particles. For example, in one or more embodiments, the silicon-carbon composite may include a secondary particle (core), in which primary silicon particles are assembled, and an amorphous carbon first coating layer (shell) on the surface of the secondary particle. The amorphous carbon may also be between the primary silicon particles, and, for example, the primary silicon particles may each be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon first coating layer on a surface of the core.

In one or more embodiments, the Si-based negative electrode active material and/or the Sn-based negative electrode active material may be used in combination with a carbon-based negative electrode active material.

### Separator 30

Depending on the type or kind of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a first coating layer including an organic material, an inorganic material, and/or a (e.g., any suitable) combination thereof on a surface (e.g., one surface or both surfaces (e.g., two opposite surfaces)) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂0₃, SrTiO₃, BaTiO₃, Mg(OH)₂, boehmite, and a (e.g., any suitable) combination thereof, but embodiments of the present disclosure are not limited thereto.

In one or more embodiments, the organic material and the inorganic material may be mixed in one first coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in an electrochemical reaction of the battery.

The non-aqueous organic solvent may be a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond), and/or the like; amides such as dimethylformamide; dioxolanes such as 1,3-dioxolane, 1,4-dioxolane, and/or the like; sulfolanes; and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a rechargeable lithium battery, enables a basic operation of the rechargeable lithium battery, and improves transportation and migration of the lithium ions between positive electrode and the negative electrode. The lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

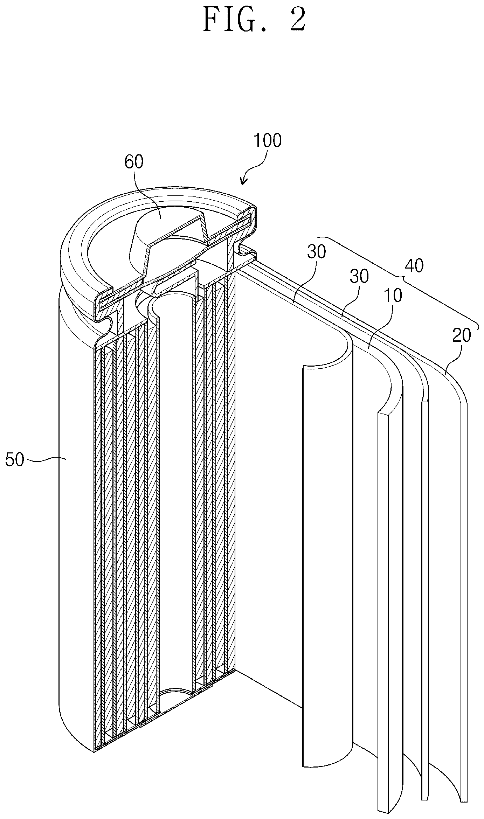

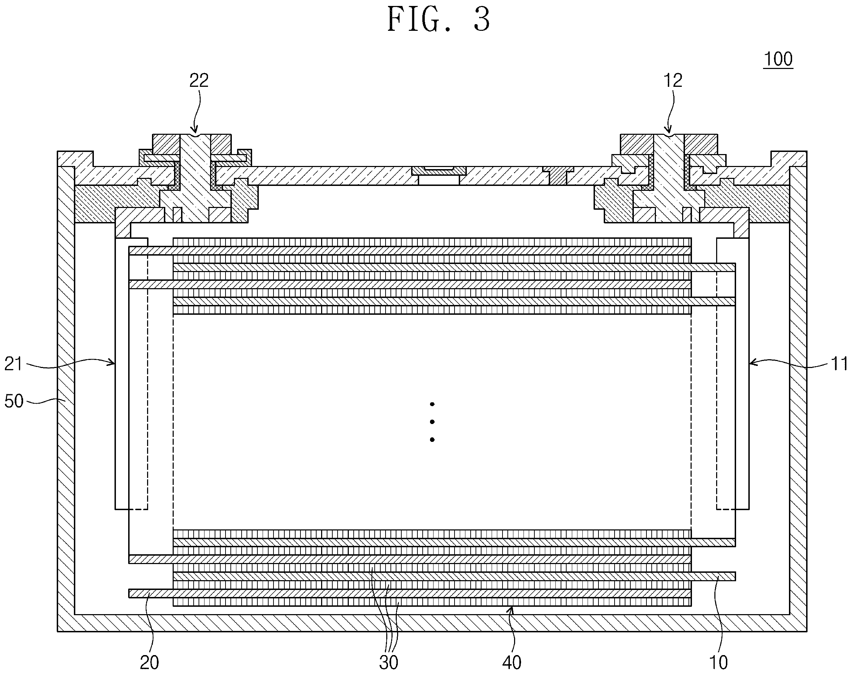

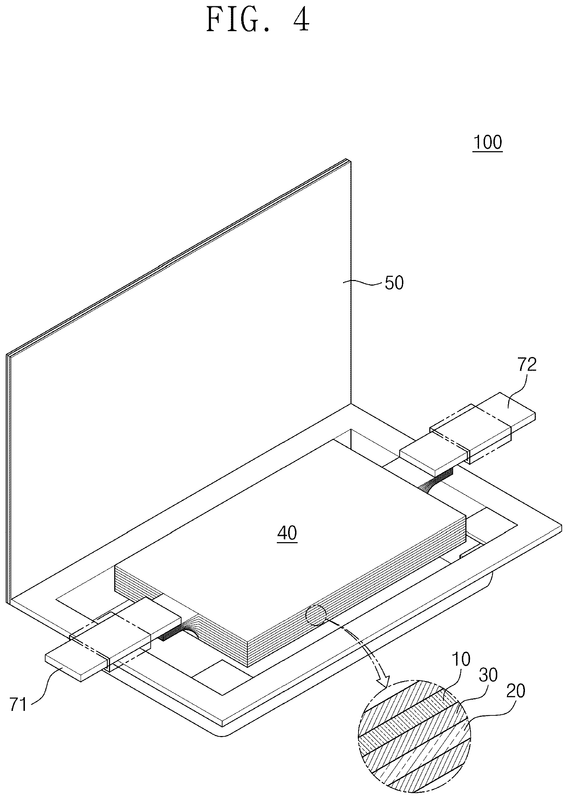

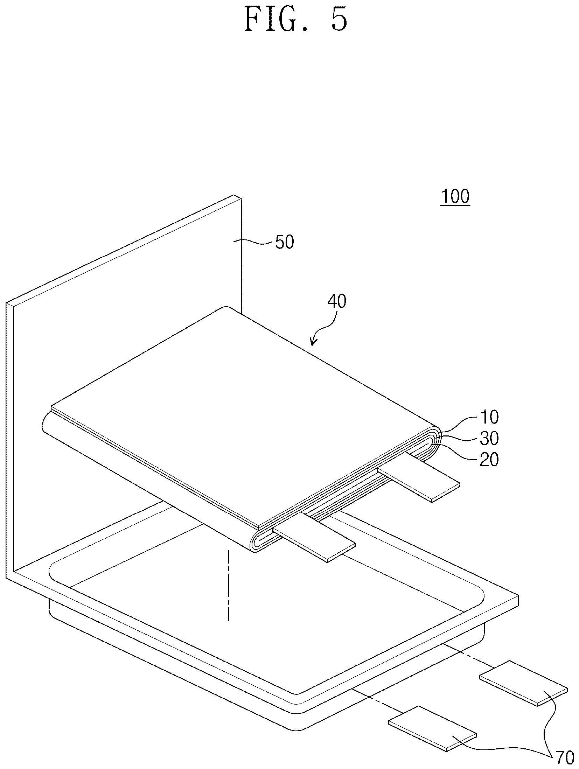

The rechargeable lithium battery may be classified into cylindrical, prismatic, pouch, or coin-type or kind batteries, and/or the like depending on their shape. FIGS. 2 to 5 are each a schematic view illustrating a rechargeable lithium battery according to one or more embodiments of the present disclosure. FIG. 2 shows a cylindrical battery, FIG. 3 shows a prismatic battery, and FIGS. 4 and 5 each show a pouch-type or kind battery. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In some embodiments, the rechargeable lithium battery 100 may include a sealing member 60 sealing the case 50, as shown in FIG. 2. In some embodiments, as shown in FIG. 3, the rechargeable lithium battery 100 may include a positive lead tab 11, a positive terminal 12, a negative lead tab 21, and a negative terminal 22. In some embodiments, as shown in each of FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 illustrates an enlarged view showing a positive electrode active material layer of a rechargeable lithium battery according to one or more embodiments of the present disclosure. Referring to FIG. 6, as discussed above, the positive electrode active material layer AML1 (see FIG. 1) includes a first particle PTC1, a second particle PTC2, a conductive material CDM (e.g., electron conductor), and a binder BND. A plurality of the first particles PTC1 and a plurality of the second particles PTC2 may constitute a positive electrode active material according to one or more embodiments of the present disclosure.

In one or more embodiments, the positive electrode active material layer AML1 may further include an additive that may serve as a sacrificial positive electrode.

In one or more embodiments, a content (e.g., amount) of the positive electrode active material PTC1 and PTC2 in the positive electrode active material layer AML1 may range from about 90 wt% to about 99 wt% relative to about 100 wt% of a total weight of the positive electrode active material layer AML1. Each of the contents of the binder BND and the conductive material CDM may be about 0.5 wt% to about 5 wt% relative to about 100 wt% of the total weight of the positive electrode active material layer AML1.

The binder BND may combine the first particles PTC1, the second particles PTC2, and the conductive material CDM with each other. For example, the binder BND may include at least one selected from among the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM may be used to improve conductivity (e.g., electrical conductivity) of the positive electrode active material layer AML1. Any conductive material that does not cause a chemical change of the positive electrode active material layer AML1 may be used without limitation as the conductive material CDM. For example, the conductive material CDM may include: a carbon-based material such as natural graphite, artificial graphite, carbon black, acetylene black, Ketjen black, carbon fiber, carbon nano-fiber, and/or carbon nano-tube; a metal-based material containing copper, nickel, aluminium, silver and/or the like and having a metal powder or metal fiber form (e.g., in a form of metal powder or metal fibers); a conductive polymer such as a polyphenylene derivative; and/or a (e.g., any suitable) mixture (e.g., combination) thereof.

Hereinafter, each of the first particle PTC1 and the second particle PTC2 will be explained in more detail.

### First Particle PTC1

The first particle PTC1 may have (e.g., be in) a single particle form (e.g., in a form of single/monolithic particle). In the present disclosure, the single particle may refer to a sole or single particle that does not have a grain boundary inside. The single particle has a morphology phase, and may refer to a single particle, a monolith structure, a monolithic structure, or a non-agglomerated particle in which the particles exist as an independent phase that are not agglomerated. For example, the single particle may be a single crystal. In one or more embodiments, the single particle may be a particle containing several crystals. In one or more embodiments, the single particle may be a solely separated form. In one or more embodiments, the single particle may be in the form of 2 to 100 single particles attached to each other.

In one or more embodiments, the first particle PTC1 may be a positive electrode active material of a nano type or kind. The first particle PTC1 may include at least one primary particle. In one or more embodiments, the first particle PTC1 may have a random form in which primary particles are agglomerated.

The first particles PTC1 may be provided in one or more suitable sizes. For example, in one or more embodiments, the average particle diameter of the first particles PTC1 may be about 500 nanometers (nm) to about 2.5 micrometers (µm), or about 1 µm. The minimum particle diameter of the first particles PTC1, i.e., the diameter of the primary particles may be about 100 nm to about 500 nm, or about 200 nm to about 300 nm.

In one or more embodiments, the average particle diameter may be measured by a particle size analyzer. The average particle diameter may refer to the diameter of particles at an accumulated volume of about 50 vol% (D50) in a particle size distribution.

In one or more embodiments, the minimum particle diameter, that is, the diameter of the primary particles may refer to the diameter measured by randomly selecting about 30 primary particles on an electron microscope image of the first particles PTC1.

In one or more embodiments, the first particle PTC1 may include a first coating layer on the surface thereof. The first coating layer may cover the entire surface of the first particle PTC1 or may cover a portion of the surface of the first particle PTC1. For example, in one or more embodiments, the first coating layer may include carbon and/or a carbon-containing compound. The first coating layer may further include at least one selected from among the group consisting of a titanium-containing compound, a magnesium-containing compound, and a vanadium-containing compound. The metal-containing compound such as the titanium-containing compound, the magnesium-containing compound, and the vanadium-containing compound may be, for example, a metal oxide, a metal hydroxide, a metal carbonate, a synthesized compound thereof or a (e.g., any suitable) mixture thereof. The metal-containing compound may further include other metal or non-metal elements. For example, in one or more embodiments, the metal-containing compound may further include lithium. The first particle PTC1 may show improved structural stability and improved electrical conductivity by including the first coating layer.

The first particle PTC1 may include an olivine-based lithium compound represented by Chemical Formula 1.

**Chemical Formula 1** **Liₐ₁Feₓ₁B¹_{y1}PO_{4-b1}**

In Chemical Formula 1, 0.8≤a1≤1.2, 0.1≤x1≤1.0 (e.g. 0.1≤x1≤0.999), 0.001≤y1≤0.05, 0≤b1≤ 0.05, and x1 + y1 = 1 is satisfied. B¹ includes (e.g., be) at least one element selected from among the group consisting of Ti, Mg, V and Nb. B¹ may be a dopant doped into the first particle PTC1. For example, in one or more embodiments, B¹ may include Ti.

In one or more embodiments, the first particle PTC1 may further include carbon derived from the first coating layer. The carbon element content (e.g., amount) in the first particle PTC1 may be about 0.5 wt% to about 5 wt%, about 0.5 wt% to about 3 wt%, about 0.5 wt% to about 2 wt%, or about 1.5 wt% to about 2.5 wt% based on a total weight of 100 wt% of the first particle PTC1.

### Second Particle PTC2

The second particle PTC2 may have (e.g., be in) a single particle form (e.g., in a form of single/monolithic particle) similar to the above-described first particle PTC1. The explanation of the single particle may be the same as or similar to that previously explained on the first particle PTC1. In one or more embodiments, the second particle PTC2 may have a form constituted with one single particle. In one or more embodiments, the second particle PTC2 may have a form in which a plurality of single particles NNP are attached to each other. Because the positive electrode active material according to the present disclosure includes the second particle PTC2 with a single particle form, the rechargeable lithium battery with high capacity and high energy density may be accomplished.

In one or more embodiments, the second particle PTC2 may include a second coating layer on the surface thereof. By including the second coating layer, the second particle PTC2 may effectively suppress or reduce structural collapse due to repeated charging and discharging. Accordingly, the lifetime characteristics of the rechargeable lithium battery may be improved.

The second coating layer may include a boron-containing compound, an aluminium-containing compound and/or a (e.g., any suitable) combination thereof. The metal-containing compound in the second coating layer may be, for example, a metal oxide, a metal hydroxide, a metal carbonate, a synthesized compound thereof or a (e.g., any suitable) mixture thereof. The metal-containing compound may further include other metal or nonmetal elements. For example, in one or more embodiments, the second coating layer may further include lithium, manganese, and/or nickel.

A method for measuring the metal content (e.g., amount) in the second coating layer of the second particle PTC2 may include performing scanning electron microscopy-energy dispersive X-ray spectroscopy (SEM-EDS) on the second particles PTC2. Through the analysis, the contents of boron and/or aluminium in the second coating layer may be confirmed. As a method for measuring the metal content (e.g., amount) in the second coating layer, an inductively coupled plasma-mass spectrometry (ICP-MS), an inductively coupled plasma optical emission spectroscopy (ICP-OES) and/or the like may be used in addition to the SEM-EDS.

The average particle diameter of the second particles PTC2 may be about 2 µm to about 15 µm, about 2 µm to about 10 µm, or about 2 µm to about 5 µm. The average particle diameter of the second particles PTC2 is greater than the above-described average particle diameter of the first particles PTC1. If (e.g., when) the second particle PTC2 includes (e.g., is formed of) a plurality of single particles NNP, the average size of the single particles NNP of each of the second particles PTC2 may be greater than the average particle diameter of the first particles PTC1.

In one or more embodiments, the particle diameter may be obtained by measuring a diameter by randomly selecting about 30 second particles PTC2 on an electron microscope image on a positive electrode active material, and taking a diameter of the particles at an accumulated volume of about 50 vol% (D50) in a particle size distribution as an average particle diameter.

In one or more embodiments, the second particle PTC2 includes a lithium nickel-based composite oxide as a nickel-based positive electrode active material. In one or more embodiments, the second particle PTC2 includes a high nickel-based positive electrode active material containing the high content (e.g., amount) of nickel. The high nickel-based positive electrode active material may accomplish high capacity and high performance.

For example, in one or more embodiments, the second particle PTC2 may include a lithium nickel-based composite oxide with a layered structure, represented by Chemical Formula 2.

**Chemical Formula 2** **Liₐ₂Niₓ₂Co_{y2}Mn_{z2}X_{c2}O_{2-b2}**

In Chemical Formula 2, 0.8≤a2≤1.2, 0.8≤x2≤1.0, 0≤y2≤0.1, 0≤z2≤0.1 0≤c2≤0.05, 0≤b2≤0.05, and x2 + y2 + z2 + c2 = 1 is satisfied. X includes (e.g., be) at least one element selected from among the group consisting of Al, Ti, Mg, Zr, Mo, and Nb. X may be a dopant doped in the second particle PTC2.

The positive electrode active material according to one or more embodiments of the present disclosure will be explained in more detail with reference to FIG. 6 again. The positive electrode active material of the present disclosure includes first particles PTC1 and second particles PTC2. A mixing ratio (e.g., weight mixing ratio) of the first particles PTC1 to the second particles PTC2 in the positive electrode active material may be about 90:10 to about 50:50. In one or more embodiments, the mixing ratio (e.g., weight mixing ratio) of the first particles PTC1 to the second particles PTC2 in the positive electrode active material may be about 90:10 to about 70:30. The content (e.g., amount) of the first particles PTC1 may be greater than the content (e.g., amount) of the second particles PTC2 in the positive electrode active material.

Because the second particle PTC2 includes a high nickel-based positive electrode active material, higher capacity may be accomplished with regard to the first particle PTC1. That is, the inclusion of a high nickel-based positive electrode active material in the second particle, PTC2, allows for a higher capacity compared to the first particle, PTC1. In the positive electrode active material according to one or more embodiments of the present disclosure, the first particles PTC1 and the second particles PTC2 are mixed in an appropriate or suitable ratio, and capacity and an operating voltage may be improved compared to a comparable lithium iron phosphate (LFP) battery in the art.

The above-described compound of Chemical Formula 2 (i.e., high nickel-based positive electrode active material) may have low electrical conductivity compared to the compound of Chemical Formula 1. In the present disclosure, the second particle PTC2 as a single particle may be used, and electrical conductivity and energy density may be improved.

The first particle PTC1 has advantages in having high stability and long lifetime. By using the structurally stable first particles PTC1 as the main material of the positive electrode active material, the relatively low stability and short lifetime of the second particles PTC2 may be compensated.

The positive electrode active material of the present disclosure may improve mixture density, capacity, and energy density by mixing the second particles PTC2 with several micrometers in size with the base of the first particles PTC1 with hundreds of nanometers in size. In one or more embodiments, the pellet density of the positive electrode active material of the present disclosure may be about 2.0 g/cc to about 2.8 g/cc. The rechargeable lithium battery including the positive electrode active material of the present disclosure may exhibit improved low-temperature properties.

Because the first particles PTC1 that may be single particles have a small average particle diameter, a large amount of a binder BND may be desired or required to attach the first particles PTC1 to the current collector COL1 (see FIG. 1). Because the positive electrode active material of the present disclosure additionally includes the second particles PTC2 having a large average particle diameter as well as the first particles PTC1, the positive electrode active material layer AML1 may attach to the current collector COL1 smoothly and suitably. For example, in one or more embodiments, the content (e.g., amount) of the binder BND in the positive electrode active material layer AML1 may be reduced due to the second particles PTC2.

The rechargeable lithium battery (see FIG. 1) including the positive electrode active material according to one or more embodiments of the present disclosure may exhibit an average voltage of about 3.2 V to about 3.5 V during discharging at about 0.1 C at between about 2.5 V and about 4.25 V. In addition, the charging peaks (e.g., the number of charging peaks) appearing at a voltage of about 3.55 V to about 4.25 V may be 3 to 5 in a differential capacity (dQ/dV)-voltage charging graph for the rechargeable lithium battery of the present disclosure. In the graph, the ratio (IB/IA) of the intensity of peak B (IB) at between about 4.1 V and about 4.25 V to the intensity of peak A (IA) at between about 3.41 V and about 3.55 V may be about 0.005 to about 0.008.

### Method for Preparing Positive Electrode Active Material

A method for preparing the first particles PTC1 according to one or more embodiments of the present disclosure will be explained in more detail. An iron phosphate precursor, a lithium source, a carbon source, and a dopant source may be added to a solvent and mixed. For example, the solvent may be water, ethanol, and/or the like. The iron phosphate precursor may be a compound containing both (e.g., simultaneously) iron (Fe) and phosphorus (P), or a (e.g., any suitable) mixture of a compound containing iron (Fe) and a compound containing phosphorus (P). For example, in one or more embodiments, the iron phosphate precursor may include FePO₄·H₂O, and/or a (e.g., any suitable) mixture of FeSO₄ and H₃PO₄.

The lithium source may include at least one selected from among the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one selected from among the group consisting of glucose, sucrose, fructose, cellulose, starch, citric acid, polyacrylic acid, polyethylene glycol, and dopamine.

The dopant source may include an oxide containing a dopant metal/element and/or a chloride containing a dopant metal/element. For example, in one or more embodiments, the dopant source may include at least one selected from among the group consisting of titanium oxide, magnesium oxide, vanadium oxide, and niobium oxide.

The mixture may be subjected to wet grinding. The wet grinding may be performed using a suitable wet mill capable of controlling temperature. For example, the wet grinding may use at least one selected from among the group consisting of a bead mill, ball mill, attrition mill, apex mill, super mill, and basket mill. Through the wet grinding process, the particles in the mixture may be ground to a fine size.

A dried mixture may be formed by removing the solvent from the mixture. In one or more embodiments of the present disclosure, the formation of the dried mixture may include performing a direct evaporation method with respect to the mixture. For example, the direct evaporation method may include static drying or spray drying.

The dried mixture may then be baked under an inert atmosphere. The inert atmosphere may be a nitrogen atmosphere and/or an argon atmosphere. The temperature of the baking process may be about 500 °C to about 1000 °C, or about 600 °C to about 800 °C. The performance time of the baking process may be about 4 hours to about 20 hours, or about 6 hours to about 12 hours. Through the baking of the dried mixture, first particles PTC1 including the compound of Chemical Formula 1 may be formed.

A dry grinding process may be performed for the baked first particles PTC1. As a result, the first particles PTC1 may have a single particle form (e.g., in a form of single particles) as shown in FIG. 6.

A method for preparing the second particles PTC2 according to one or more embodiments of the present disclosure will be explained in more detail. A high nickel-based precursor may be prepared. The high nickel-based precursor may include Ni represented in the above-described Chemical Formula 2. The Ni content (e.g., amount) relative to the total metal content (e.g., amount) in the high nickel-based precursor may be greater than about 80 at%. In one or more embodiments, the high nickel-based precursor may further include Co and Mn.

In one or more embodiments, the high nickel-based precursor may be obtained through a co-precipitation method. For example, the co-precipitation method may include dissolving a transition metal raw material in a solvent such as distilled water, and continuously adding a solution of a transition metal salt together with a chelating agent and an alkaline aqueous solution to a reactor to cause precipitation. After collecting the precipitate in a slurry type or kind, the slurry solution may be filtered and dried to obtain a high nickel-based precursor that is a metal composite oxide/hydroxide.

In the present disclosure, the transition metal raw material may include a metal salt of Ni. In one or more embodiments, the transition metal raw material may further include at least one salt of a metal selected from among Co and Mn. The metal salt may include a sulfate, a nitrate, an acetate, a halide, a hydroxide, and/or the like, and any one may be used as long as it is dissolved in a solvent without limitation. The transition metal raw material according to one or more embodiments may include a nickel salt, a cobalt salt, and a manganese salt. The transition metal raw material may be blended by controlling a molar ratio so that the high nickel-based precursor may have the Ni content (e.g., amount) of about 80 at% or more.

The high nickel-based precursor and a lithium source may then be mixed in a certain ratio to form a mixture. For example, in one or more embodiments, the high nickel-based precursor and the lithium source may be mixed in a molar ratio of about 1:1. The lithium source may include at least one selected from among the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

By removing the solvent from the mixture, a dried mixture may be formed. The dried mixture may then be baked. The temperature of a baking process may be about 700 °C to about 1000 °C, or about 900 °C to about 1000 °C. The baking process may be performed under an oxidizing atmosphere such as air and oxygen. The heating time of the baking process may be about 10 hours to about 30 hours. In one or more embodiments of the present disclosure, a preliminary baking may be further performed at about 150 °C to about 800 °C prior to the baking process.

In one or more embodiments of the present disclosure, the baking process may be performed after additionally adding a flux to the mixture. The flux may be a compound containing at least one metal selected from among the group consisting of Zr, La, S, and Nb. By using the flux, the second particle PTC2 may be smoothly formed into a single particle form. In addition, the average particle diameter of the second particles PTC2 may increase.

Through the baking process, second particles PTC2 may be formed from the mixture containing the high nickel-based precursor and the lithium source. A grinding process may be performed with respect to the second particles PTC2 thus synthesized.

In one or more embodiments, a coating process may be performed with respect to the ground second particles PTC2. For example, the second particles PTC2 and a coating raw material may be added to a solvent and mixed. For example, the coating raw material may include boron and/or aluminium. After filtering and drying the second particles PTC2, surface treatment may be performed on the second particles PTC2. The surface treatment may include a heating process under an oxidizing atmosphere such as air and oxygen. The surface treatment may be performed at a temperature of about 500 °C to about 800 °C.

In one or more embodiments of the present disclosure, the coating process may include a dry coating process. For example, the second particles PTC2 and the coating raw material may be put in a dry coating device and mixed by stirring without a solvent. The surface treatment may be performed with respect to the dried mixture obtained.

By mixing the first particles PTC1 and the second particles PTC2, respectively prepared by the above-described methods, the positive electrode active material according to the present disclosure may be prepared. The first particles PTC1 and the second particles PTC2 may be mixed in a weight ratio of about 90:10 to about 50:50, or about 90:10 to about 70:30.

Carbon element analysis according to one or more embodiments of the present disclosure may be performed by an Elementar Micro Cube elemental analyzer. Particular operation method and conditions are as follows. About 1-2 mg of a sample was weighed in a tin cup, put in an automatic sampling tray, brought into a combustion tube via a ball valve, and burned at a combustion temperature of about 1000 °C. After that, the burned gas was reduced using reducing copper to form carbon dioxide. The carbon dioxide was detected using a thermal conductivity detector (TCD) detector.

In the method for measuring the carbon content (e.g., amount) according to one or more embodiments of the present disclosure, scanning electron microscopy-energy dispersive X-ray spectroscopy (SEM-EDS) was performed with respect to the surface of the particles, and quantitative analysis was performed. As the method for measuring the carbon content (e.g., amount), an inductively coupled plasma-mass spectrometry (ICP-MS), an inductively coupled plasma optical emission spectroscopy (ICP-OES), and/or the like may be used in addition to the SEM-EDS.

Hereinafter, the Examples and Comparative Examples will be described. However, the Examples are only illustrations of the present disclosure, and disclosure is not limited to the Examples.

### Example 1: Preparation of First Particles in Single Particle Form

A FePO₄·H₂O iron phosphate precursor and lithium carbonate in a molar ratio of about 1:1.03, about 2500 ppm of titanium dioxide, and about 8 wt% of glucose were mixed in water. A wet grinding process was performed by a ball milling with respect to the mixture. The mixture was evaporated and dried in a heating furnace tray, and put in a vacuum oven for drying at about 85 °C for about 4 hours. The dried mixture was baked under a nitrogen atmosphere at about 650 °C for about 10 hours. The baked product was ground to obtain first particles in a single particle form (e.g., in a form of single particles). The average size of the first particles was about 1 µm.

### Example 2: Preparation of Second Particles in Single Particle Form

A high nickel-based precursor was prepared using a co-precipitation method. for example, nickel sulfate (NiSO₄·6H₂O), cobalt sulfate (CoSO₄·7H₂O), and manganese sulfate (MnSO₄·H₂O), as the raw materials of a nickel-based metal hydroxide, in a molar ratio of about 93:5:2 were dissolved in distilled water as a solvent to prepare a metal raw material mixture solution. The metal raw material mixture solution, ammonia water, and sodium hydroxide were then added to a reactor and reacted. A slurry solution in the reactor was filtered and washed with distilled water with high purity. The material thus washed was dried in a hot air oven of about 210 °C for about 24 hours to obtain a small particle precursor (Ni_{0.93}Co_{0.05}Mn_{0.02}(OH)₂) powder having an average particle diameter of about 4 µm.

The high nickel-based precursor and anhydrous lithium hydroxide (LiOH) were dry mixed using a Henschel mixer. The mixing was performed so that the molar ratio of lithium and a transition metal was about 1:1. The transition metal is the total sum of transition metals contained in the high nickel-based precursor (Ni + Co + Mn). A flux was additionally added to the mixture and heat treatment was performed under an oxygen atmosphere at about 750 °C for about 15 hours (i.e., baking process) to synthesize second particles as the high nickel-based positive electrode active material. The second particles were ground using a Jet mill with a pressure of about 3 bars.

The second particles were added to distilled water and washed. Boron oxide and aluminium oxide corresponding to about 3 mol% on the basis of the total sum of the transition metals of the second particles were added to perform boron and aluminium coating. The coated second particles were dried at about 150 °C for about 12 hours and heated (i.e., surface treated) under an oxygen atmosphere at about 700 °C for about 15 hours.

### Example 3-1: Preparation of Mixture of First Particles and Second Particles

The first particles of Example 1 and the second particles of Example 2 were mixed in a mass ratio of about 9:1 to prepare a positive electrode active material.

### Example 3-2: Preparation of Mixture of First Particles and Second Particles

The first particles of Example 1 and the second particles of Example 2 were mixed in a mass ratio of about 8:2 to prepare a positive electrode active material.

### Example 3-3: Preparation of Mixture of First Particles and Second Particles

The first particles of Example 1 and the second particles of Example 2 were mixed in a mass ratio of about 7:3 to prepare a positive electrode active material.

### Example 3-4: Preparation of Mixture of First Particles and Second Particles

The first particles of Example 1 and the second particles of Example 2 were mixed in a mass ratio of about 6:4 to prepare a positive electrode active material.

### (Comparative Example) Example 3-5: Preparation of Mixture of First Particles and Second Particles

The first particles of Example 1 and the second particles of Example 2 were mixed in a mass ratio of about 5:5 to prepare a positive electrode active material.

### Manufacture of Positive Electrode

95 wt% of a final positive electrode active material, 3 wt% of a polyvinylidene fluoride binder, and 2 wt% of a carbon black conductive material were mixed in an N-methyl pyrrolidone solvent to prepare a positive electrode active material slurry. The positive electrode active material slurry was applied on an aluminium current collector, dried and rolled to manufacture a positive electrode.

### Manufacture of Negative Electrode

Graphite, a binder, and a conductive material were mixed in an N-methyl pyrrolidone solvent to prepare a negative electrode active material slurry. The negative electrode active material slurry was applied on a copper current collector, dried and rolled to manufacture a negative electrode.

### Fabrication of Rechargeable Lithium Battery

A coin full cell was formed using the positive electrode and the negative electrode prepared. A polypropylene film (Celgard 3510) was used as a separator. As an electrolyte, an electrolyte solution obtained by mixing 1.3 M LiPF₆ with a mixture solvent of ethylene carbonate (EC): diethyl carbonate (DEC): fluoroethylene carbonate (FEC) (2:6:2 by volume ratio) was used.

### Evaluation Example 1: Analysis on the Surface of Positive Electrode Active Material

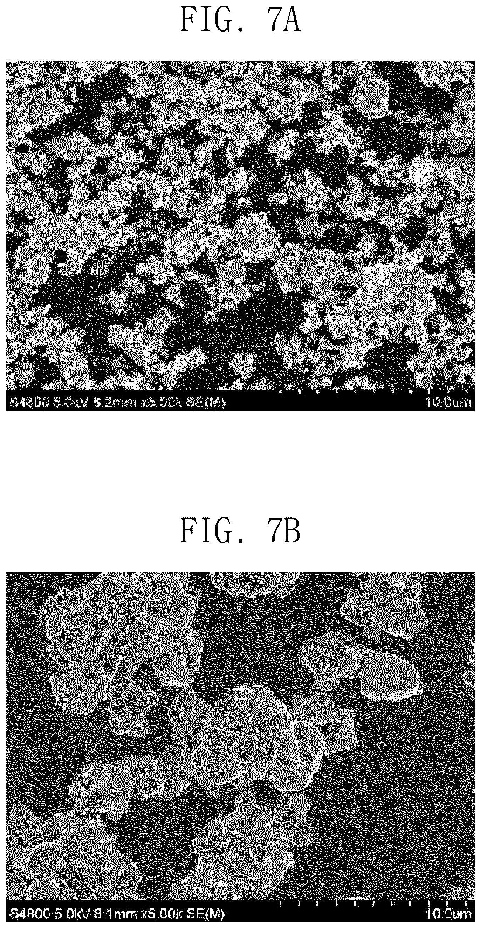

The scanning electron microscope (SEM) image of the first particles prepared in Example 1 is shown in FIG. 7A. The SEM image of the second particles prepared in Example 2 is shown in FIG. 7B. Referring to FIG. 7A, it can be confirmed that the first particles according to one or more embodiments of the present disclosure have a fine single particle form with a nano size. Referring to FIG. 7B, it can be confirmed that the second particles according to one or more embodiments of the present disclosure have a single particle form with a micrometer size. It can be confirmed that the second particle has a single particle or a form in which a plurality of single particles are attached to each other. That is, the first particles are shown as having a fine single particle form with a nano size (FIG. 7A), while the second particles are characterized by a single particle form with a micrometer size (FIG. 7B). Additionally, the second particle may either be a single particle or a cluster of multiple single particles agglomerated together.

### Evaluation Example 2: Evaluation of Active Material

The average particle diameters (D50) and average pellet density (PD) of the positive electrode active materials of Examples 1, 2, 3-1, 3-2, 3-2, 3-4 and 3-5 were measured, and the results are shown in Table 1. The pellet density of the positive electrode was determined by compressing the electrode material under a controlled pressure and measuring its mass and volume. First, a positive electrode sheet was cut into a circular or rectangular sample of a predetermined area. The mass of the sample was measured using an analytical balance with an accuracy of 0.1 mg. The thickness of the pelletized electrode was measured using a micrometer or a thickness gauge, ensuring that the measurement was taken at multiple points to obtain an average value. The volume of the pellet was calculated by multiplying the measured thickness by the predetermined area of the sample. The pellet density was then determined by dividing the measured mass by the calculated volume and expressed in units of g/cm³.

**Table 1**

| | D50 (µm) | PD (g/cc) |
|---|---|---|
| Example 1 | 1.0 | 2.43 |
| Example 2 | 3.1 | 2.98 |
| Example 3-1 | 1.3 | 2.68 |
| Example 3-2 | 1.4 | 2.71 |
| Example 3-3 | 1.5 | 2.77 |
| Example 3-4 | 1.7 | 2.62 |
| Example 3-5 | 1.9 | 2.59 |

Referring to Table 1, it can be confirmed that the average particle diameter (D50) of each of the positive electrode active materials according to Examples 3-1 to 3-5 of the present disclosure was markedly increased compared to that of the positive electrode active material of Example 1. In addition, it can be confirmed that the average pellet density of each of the positive electrode active materials of Examples 3-1 to 3-5 was also increased compared to that of the positive electrode active material of Example 1.

### Evaluation Example 3: Evaluation of Battery Properties

The properties of each of the rechargeable lithium batteries fabricated using the corresponding positive electrode active materials of Examples 1, 2, 3-1, 3-2, 3-3, 3-4, and 3-5 were evaluated.

Rechargeable lithium batteries were each initially charged under constant current (about 0.1 C) conditions, and after resting for about 10 minutes, discharged under constant current (about 0.1 C) conditions until about 2.5 V to carry out initial charging and discharging. Then, after charging under about 0.2 C, and discharging under about 0.2 C, at about -20 °C until about 2.5 V, discharge capacity was measured.

Lifetime evaluation was performed under about 4.3 V-2.5 V and about 1 C/1 C conditions at about 45 °C. The evaluation results of the battery properties are shown in Table 2.

**Table 2**

| | Mixing ratio | | Coin cell | | | | | |
|---|---|---|---|---|---|---|---|---|
| | First particl es | Second particle s | Charge voltage (V) | 0.1 C Discharg e voltage (V) | 0.1 C Discharg e capacity (mAh/g) | Capacit y per volume (mAh/c c) | -20 °C discharg e capacity (mAh/cc) | 45 °C lifetime (%) |
| Example 1 | 100% | 0% | 3.8 | 3.27 | 159.6 | 388 | 48.8 | 98.4 |
| Example 2 | 0% | 100% | 4.25 | 3.65 | 221.3 | 659 | 216.8 | 94.3 |
| Example 3-1 | 90% | 10% | 4.25 | 3.38 | 166.6 | 446 | 65.6 | 98 |
| Example 3-2 | 80% | 20% | 4.25 | 3.40 | 172.7 | 468 | 82.4 | 97.6 |
| Example 3-2 | 70% | 30% | 4.25 | 3.43 | 182.0 | 504 | 99.2 | 97.2 |
| Example 3-4 | 60% | 40% | 4.25 | 3.44 | 185.1 | 520 | 109 | 95.8 |
| Example 3-5 | 50% | 50% | 4.25 | 3.46 | 190.5 | 541 | 125 | 95.2 |

Referring to Table 2, it can be confirmed that the rechargeable batteries according to Examples 3-1 to 3-5 all exhibited rapid increase of voltages and capacity compared to the rechargeable battery according to Example 1. In addition, it can be confirmed that the rechargeable batteries according to Examples 3-1 to 3-5 all exhibited excellent or suitable lifetime characteristics at about 45 °C compared to the rechargeable battery according to Example 2.

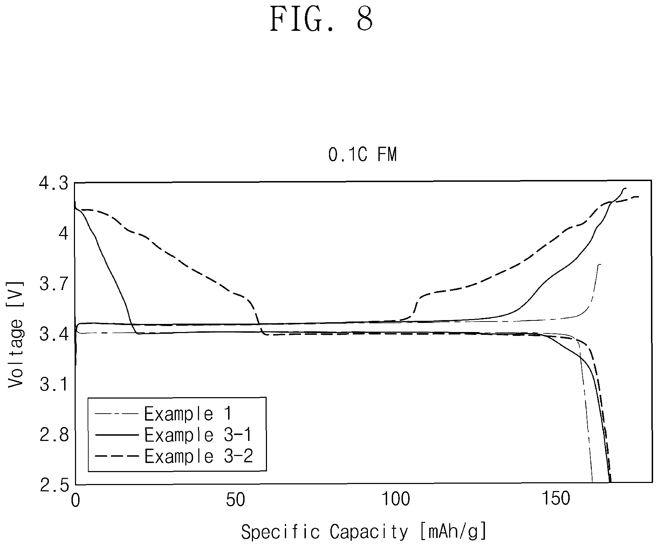

The voltage-capacity properties for each of the rechargeable batteries fabricated using the corresponding positive electrode active materials of Examples 1, 3-1, and 3-2 were measured and are shown in FIG. 8. Referring to FIG. 8, it can be confirmed that the rechargeable lithium batteries according to Examples 3-1 and 3-2 each exhibited increased voltages and capacity compared to the rechargeable battery according to Example 1.

The differential capacity for each of the rechargeable lithium batteries fabricated using the corresponding positive electrode active materials of Examples 1, 3-1, and 3-2 was evaluated.

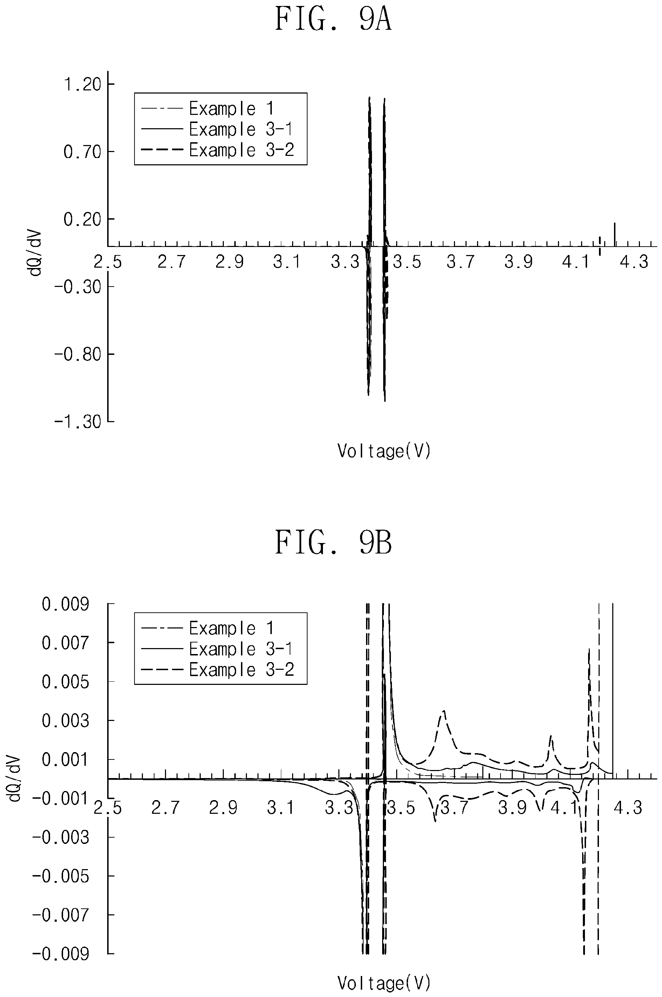

The rechargeable lithium batteries were each charged and discharged with about 0.1 C for the first time and then charged and discharged for the second time by the same method. FIG. 9A is a graph measuring and showing a first differential capacity (dQ/dV)-voltage charging curve, and FIG. 9B is a graph showing the first differential capacity (dQ/dV)-voltage charging curve by enlarging only a portion of a voltage range of about 2.5 to about 4.3 V.

Referring to FIG. 9B, it can be confirmed that the charging peaks (e.g., the number of charging peaks) shown at a voltage between about 3.55 V and about 4.25 V for each of the rechargeable batteries according to Examples 3-1 and 3-2 are 3 or more. In contrast, only one peak was confirmed in the voltage range for the rechargeable battery according to Example 1.

Referring to FIG. 9A, it can be confirmed that each of the rechargeable batteries according to Examples 3-1 and 3-2 showed the ratio (IB/IA) of the intensity of peak B (IB) at between about 4.1 V and about 4.25 V to the intensity of peak A (IA) at between about 3.41 V and about 3.55 V of about 0.0062.

In the positive electrode active material according to the disclosure, an olivine-based first particle base with several hundred nanometers in size is mixed with layered second particles with several micrometers in size, and the mixture density, capacity, and energy density may be improved. The positive electrode active material layer according to the present disclosure may be smoothly attached to the positive electrode current collector even with a relatively small amount of a binder. The rechargeable lithium battery according to the present disclosure may have a relatively high average voltage.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described, it is understood that the disclosure should not be limited to these embodiments but one or more suitable changes and modifications can be made by one ordinary skilled in the art within the scope of the disclosure as hereinafter claimed and equivalents thereof.

## Claims

1. A positive electrode active material, comprising:
a plurality of first particles each comprising a compound of Chemical Formula 1 and having a first average particle diameter; and
a plurality of second particles each comprising a compound of Chemical Formula 2 and having a second average particle diameter that is greater than the first average particle diameter,
wherein a content of the first particles is greater than a content of the second particles,
Chemical Formula 1 Liₐ₁Fex₁B¹y₁PO_{4-b1}
in Chemical Formula 1, 0.8≤a1≤1.2, 0.1≤x1≤1.0, 0.001≤y1≤0.05, 0≤b1≤0.05, x1 + y1 = 1, and B¹ is at least one element selected from among the group consisting of Ti, Mg, V, and Nb, and
Chemical Formula 2 Liₐ₂Niₓ₂Co_{y2}Mnz₂X_{c2}O_{2-b2}
in Chemical Formula 2, 0.8≤a2≤1.2, 0.8≤x2≤1.0, 0≤y2≤0.1, 0≤z2≤0.1, 0≤c2≤0.05, 0≤b2≤0.05, x2 + y2 + z2 + c2 = 1, and X is at least one element selected from among the group consisting of Al, Ti, Mg, Zr, Mo, and Nb.

2. The positive electrode active material as claimed in claim 1, wherein a weight mixing ratio of the first particles to the second particles is about 90:10 to about 70:30.

3. The positive electrode active material as claimed in claim 1 or claim 2, wherein each of the first particles and the second particles is a form of a single particle.

4. The positive electrode active material as claimed in any one of claims 1 to 3,
wherein the second particle has a form in which a plurality of single particles are attached to each other, and
the first average particle diameter is smaller than an average particle diameter of the plurality of single particles.

5. The positive electrode active material as claimed in any one of claims 1 to 4,
wherein the first particle comprises a first coating layer containing carbon, and
a carbon content in the first particle is about 1.5 wt% to about 2.5 wt% based on a total weight of 100 wt% of the first particle.

6. The positive electrode active material as claimed in any one of claims 1 to 5,
wherein the second particle comprises a second coating layer, and
the second coating layer comprises a boron-containing compound, an aluminum-containing compound, or a combination thereof.

7. The positive electrode active material as claimed in any one of claims 1 to 6, wherein the first average particle diameter is about 500 nm to about 2.5 µm.

8. The positive electrode active material as claimed in any one of claims 1 to 7, wherein the second average particle diameter is about 2 µm to about 5 µm.

9. The positive electrode active material as claimed in any one of claims 1 to 8, wherein a pellet density of the positive electrode active material is about 2.0 g/cc to about 2.8 g/cc.

10. A positive electrode, the positive electrode comprising:
a positive electrode current collector; and
a positive electrode active material layer on the positive electrode current collector,
wherein the positive electrode active material layer comprises the positive electrode active material as claimed in any one of claims 1 to 9, a conductive material, and a binder.

11. The positive electrode as claimed in claim 10, wherein a content of the binder is about 0.5 parts by weight to about 5 parts by weight on the basis of about 100 parts by weight of the positive electrode active material layer.

12. The positive electrode as claimed in claim 10 or claim 11, wherein the binder comprises at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon.

13. The positive electrode as claimed in any one of claims 10 to 12, wherein a content of the conductive material is about 0.5 parts by weight to about 5 parts by weight on the basis of about 100 parts by weight of the positive electrode active material layer.

14. The positive electrode as claimed in any one of claims 10 to 13, wherein the conductive material comprises:
a carbon-based material comprising natural graphite, artificial graphite, carbon black, acetylene black, Ketjen black, carbon fiber, carbon nano-fiber, and/or carbon nano-tube;
a metal-based material comprising copper, nickel, aluminium, and/or silver and having a form of metal powder or a form of metal fibers;
a conductive polymer comprising a polyphenylene derivative; or
a mixture thereof.

15. A rechargeable lithium battery, comprising:
the positive electrode as claimed in any one of claims 10 to 14;
a negative electrode comprising a negative electrode current collector and a negative electrode active material layer on the negative electrode current collector; and
a separator between the positive electrode and the negative electrode.
